(19) Europäisches Patentamt European Patent Office Office européen des brevets

(11) **EP 4 550 200 A1**

(12) **EUROPEAN PATENT APPLICATION**

(43) Date of publication:
**07.05.2025 Bulletin 2025/19**

(21) Application number: **24200570.0**

(22) Date of filing: **16.09.2024**

(51) International Patent Classification (IPC):
**G06F 30/20** (2020.01)  **G06F 30/28** (2020.01)
**G06F 111/10** (2020.01)  **G06F 119/08** (2020.01)

(52) Cooperative Patent Classification (CPC):
**G06F 30/20; B33Y 80/00;** F28F 2200/00;
G06F 30/28; G06F 2111/10; G06F 2119/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.10.2023 US 202318497865**

(71) Applicant: **The Boeing Company**
**Arlington, VA 22202 (US)**

(72) Inventors:
• **Azam, Abdullah**
**Arlington, 22202 (US)**
• **Jiranek, Lukas**
**Arlington, 22202 (US)**
• **Elford, Michael C.**
**Arlington, 22202 (US)**
• **Yousefiani, Ali**
**Arlington, 22202 (US)**

(74) Representative: **Arnold & Siedsma**
**Bezuidenhoutseweg 57**
**2594 AC The Hague (NL)**

(54) **SYSTEMS AND METHODS FOR DESIGNING COMPONENTS USED IN THERMAL MANAGEMENT APPLICATIONS**

(57)      Disclosed herein is a computer-implemented method of generating a three-dimensional structure for a thermal management component. The computer-implemented method of generating a three-dimensional structure for a thermal management component comprises selecting, by a processor, at least one three-dimensional element from a plurality of three-dimensional elements. The computer-implemented method of generating a three-dimensional structure for a thermal management component also comprises determining, by the processor, a surface area necessary to dissipate heat from a first fluid according to a desired temperature difference and a desired heat transfer coefficient. The computer-implemented method of generating a three-dimensional structure for a thermal management component further comprises generating, by the processor, the three-dimensional structure for the thermal management component by intercoupling a quantity of the selected three-dimensional elements whose combined surface area equals the determined surface area.

FIG. 3

EP 4 550 200 A1

## Description

### FIELD

This disclosure relates generally to designing parts, and more particularly to systems and method for designing thermal management components such as those used in a heat exchanger.

### BACKGROUND

At present, systems and methods for designing components used in thermal management applications start with designing a core. The core is a functional element of thermal management systems that performs the heat transfer. Designing of the core design starts with its sizing. This activity uses geometrically simple cells or channels in periodic arrangements (plate and fin or shell and tube structure being some of the common ones) and then optimizes the structures based on the thermal requirements for the thermal management application. However, this process is often driven by engineering knowledge and requires iterative steps to optimize the size of the structure. Such an iterative sizing method and design generation requires substantial time and is computationally limited by the periodicity of the whole solution. In other words, the larger the core (and corresponding quantity of repeating cells), the longer and computationally challenging is the process for optimizing the core. Accordingly, there is a need for new design methods that are computationally efficient while meeting the thermal requirements for the thermal management application and or the particular shape/size required for the overall structure of which the thermal management components forms a part.

Furthermore, certain applications require that the thermal management component have certain properties related to strength and loading. A conventional plate and fin structure may not meet the structural requirements of some applications. Incorporating strength and loading requirements into the design of thermal management components requires significant experimentation, which can cause undue delays and complexity. Such shortcomings makes these conventional techniques unsuitable for multifunctional applications such as mechanically loaded thermal management components.

### SUMMARY

The subject matter of the present application has been developed in response to the present state of the art, and in particular, in response to the shortcomings of conventional systems and methods for designing components used in thermal management applications, that have not yet been fully solved by currently available techniques. Accordingly, the subject matter of the present application has been developed to provide systems and methods for designing components used in thermal management applications that overcome at least some of the above-discussed shortcomings of prior art techniques.

The following is a non-exhaustive list of examples, which may or may not be claimed, of the subject matter, disclosed herein.

Disclosed herein is a computer-implemented method of generating a three-dimensional structure for a thermal management component according to a first example. The computer-implemented method of generating a three-dimensional structure for a thermal management component comprises selecting, by a processor, at least one three-dimensional element from a plurality of three-dimensional elements. The computer-implemented method of generating a three-dimensional structure for a thermal management component also comprises determining, by the processor, a surface area necessary to dissipate heat from a first fluid according to a desired temperature difference and a desired heat transfer coefficient. The computer-implemented method of generating a three-dimensional structure for a thermal management component further comprises generating, by the processor, the three-dimensional structure for the thermal management component by intercoupling a quantity of the selected three-dimensional elements whose combined surface area equals the determined surface area.

The first example may include selecting, by the processor, the three-dimensional element further comprises determining, by the processor, a performance factor based on at least a size and an aspect ratio of the three-dimensional element. The three-dimensional element is selected based at least on the performance factor meeting a predetermined threshold.

The first example may include determining, by the processor, the surface area necessary to dissipate heat from the first fluid according to the desired temperature difference and the desired heat transfer coefficient further comprises determining, by the processor, a first quantity of heat dissipated by the generated the three-dimensional structure, and determining, by the processor, a second surface area. The second surface area dissipates a quantity of heat that is closer to the heat than a quantity of heat dissipated by the surface area.

In the first example, the quantity of heat dissipated by the generated the three-dimensional structure may be determined by using thermal data associated with the selected at least one three-dimensional element, and simulating a rate of heat transfer by the generated the three-dimensional structure.

In the first example, the surface area may be determined based on a log mean temperature difference formula that uses the surface area, a first temperature difference, the heat transfer coefficient, and a second temperature difference of a second fluid, the second fluid used to regulate the temperature of the first fluid.

In the first example, the computer implemented method may further comprise receiving, via an input device a desired shape of the thermal management component. The three-dimensional structure is generated so that the three-dimensional structure has the desired shape.

In the first example, the first fluid may be a fluid to be cooled within a heat exchanger and the component forms part of the heat exchanger.

In the first example, the three-dimensional element may comprise one or more triply periodic minimal surfaces. The preceding subject matter of this paragraph characterizes example 8 of the present disclosure, wherein example 8 also includes the subject matter according to any of examples 1-7, above.

Further disclosed herein is a system according to a second example. The system comprises a processor, an input device, a display device, and a memory device storing instructions. The memory device storing instructions, when executed by the processor, cause the processor to, at least select a three-dimensional element from a plurality of three-dimensional elements, determine a surface area necessary to dissipate heat from a first fluid according to a desired first temperature difference and a desired heat transfer coefficient, generate a three-dimensional structure for a thermal management component by intercoupling a quantity of the selected three-dimensional element whose combined surface area equals the determined surface area, and display, via the display device, the generated three-dimensional structure for the thermal management component.

In the second example, the instructions may further cause the processor to determine a performance factor based on at least a size and an aspect ratio of the three-dimensional element. The three-dimensional element may be selected based at least on the performance factor meeting a predetermined threshold.

In the second example, the instructions may further cause the processor to receive an input, via an input device, of the desired heat transfer coefficient, determine a first surface area, determine a first estimated heat transfer coefficient, and determine a second surface area corresponding to the first estimated heat transfer coefficient. The second surface area may dissipate a quantity of heat that is closer to the heat than a quantity of heat dissipated by the first surface area.

In the second example, the instructions may further cause the processor to determine the first estimated heat transfer coefficient by simulating a rate of heat transfer over first surface area and equating the first estimated heat transfer coefficient to the heat transfer coefficient associated with the simulated rate of heat transfer.

In the second example, the instructions may further cause the processor to determine the surface area based on a log mean temperature difference formula that uses the surface area, the first temperature difference, the heat transfer coefficient, and a second temperature difference of a second fluid, the second fluid used to regulate the temperature of the first fluid.

In the second example, the instructions may further cause the processor to receive, via an input device a desired shape of the thermal management component. The three-dimensional structure may be generated so that the three-dimensional structure has the desired shape.

In the second example, the first fluid may be a fluid to be cooled within a heat exchanger and the thermal management component forms part of the heat exchanger.

In the second example, the three-dimensional element may comprise one or more triply periodic minimal surfaces.

Additionally disclosed herein is a non-transitory computer-readable medium storing instructions according to a third example. The non-transitory computer-readable medium storing instructions when executed by a processor, cause the processor to select a three-dimensional element; from a plurality of three-dimensional elements, determine a surface area necessary to dissipate heat from a first fluid according to a desired first temperature difference and a desired heat transfer coefficient, generate a three-dimensional structure for a thermal management component by intercoupling a quantity of the selected three-dimensional element whose combined surface area equals the determined surface area, and display, via the display device, the generated three-dimensional structure for the thermal management component.

In the third example, the instructions may further cause the processor to receive an input, via an input device, of the desired heat transfer coefficient, determine a quantity of heat dissipated by the generated the three-dimensional structure, and determine a second surface area. The second surface area may dissipate a quantity of heat that is closer to the heat than a quantity of heat dissipated by the first surface area. The quantity of heat dissipated by the generated the three-dimensional structure may be determined by using thermal data associated with the selected at least one three-dimensional element and simulating a rate of heat transfer by the generated the three-dimensional structure.

In the third example, the instructions may further cause the processor to determine the surface area based on a log mean temperature difference formula that uses the surface area, the first temperature difference, the heat transfer coefficient, and a second temperature difference of a second fluid, the second fluid used to regulate the temperature of the first fluid.

In the third example, the instructions may further cause the processor to receive, via an input device a desired shape of the thermal management component. The three-dimensional structure may be generated so that the three-dimensional structure has the desired shape.

In a fourth example, a method of manufacturing and/or assembling a three-dimensional structure for a thermal management component is provided. The fourth example comprises executing the computer-implemented method of the first example, optionally using the system of the second example and/or the non-transitory medium of the third example, and subsequently manufacturing and/or assembling the three-dimensional structure for the thermal management component, generated by the first example (and/or through the second and/or third examples).

In a fifth example, a three-dimensional structure for a thermal management component is provided, which is manufactured according to the method fo the fourth example.

The described features, structures, advantages, and/or characteristics of the subject matter of the present disclosure may be combined in any suitable manner in one or more examples and/or implementations. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example or implementation. In other instances, additional features and advantages may be recognized in certain examples and/or implementations that may not be present in all examples or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.

## BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings, which are not necessarily drawn to scale, depict only certain examples of the subject matter and are not therefore to be considered to be limiting of its scope, the subject matter will be described and explained with additional specificity and detail through the use of the drawings, in which:

Figure 1 is a schematic block diagram of a system for designing components used in thermal management applications, according to one or more examples of the present disclosure;

Figure 2 is a schematic block diagram of a data management apparatus used by components of the system of Figure 1, according to one or more examples of the present disclosure;

Figure 3 is a schematic flow diagram of a method of designing components used in thermal management applications, according to one or more examples of the present disclosure;

Figure 4 is a view of three-dimensional structures having triple periodic minimal surfaces (TPMS), according to one or more examples of the present disclosure;

Figure 5A is an exposed view of a three-dimensional structure, according to one or more examples of the present disclosure;

Figures 5B-5D are respective views of three-dimensional structures, according to one or more examples of the present disclosure;

Figure 6A is a view of a component used in thermal management applications, according to one or more examples of the present disclosure; and

Figure 6B is a view showing a three-dimensional structure incorporated into a component, such as the component of Figure 6A, according to one or more examples of the present disclosure.

## DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

The systems and methods disclosed herein enable the design of components used in thermal management applications. Heat exchangers use thousands of cells, or repeatable units of three-dimensional structures to create a large surface area for a thermal management component. This large surface area is used for heat exchange purposes. In one example, the thermal management component cools down a first fluid that passes through its body by having a second fluid, with a lower temperature, pass over the large surface area of the three-dimensional structures. In a second example, the first fluid passes through cavities within the three-dimensional structures. In another example, the thermal management component is used to dissipate heat from a component that produces heat instead of a first fluid passing through the body of the heat exchanger. In some of these examples, the thermal management component uses three-dimensional structure in the shape of long fins or tubes to maximize surface area. This may be referred to as a plate and fin or shell and tube type heat exchangers. In another example, the thermal management component is used in multi-fluid heat exchangers. In another example, the thermal management component is used in phase change heat exchangers.

While plate and fin type heat exchanges have readily determinable heat transfer characteristics that can be modified to support various heat management applications, such designs may require a total volume that exceeds the spatial constraints of a particular application and also may not provide fully optimized solution due to this core structure being made up of periodic arrangement of these cells or channels. In most thermal management devices, the temperature difference varies throughout the core envelope. Therefore, in certain examples, a truly optimized solution is not periodic but reflects the temperature differential across the envelope.

In other words, in order to achieve a particular heat transfer exchange rate using a plate and fin structure, the designer has to determine the surface area and consequently the dimensions of the structure, but such dimensions may not necessarily lead to a design that can also perform within the constraints of a size and/or shape requirement of a particular application. This either leads to poor performance, or a structure that is not ideal for a particular application.

In various examples, the systems and methods of the present disclosure generate a structure that conforms to the shape of a particular application. The structure incorporates intercoupled three-dimensional elements, which can be any of various three-dimensional elements or structures, such as three-dimensional elements that have triple periodic minimal surfaces (TPMS) (i.e., TPMS elements) or any other thermally or structurally optimized shape or structure. The surface area of the three-dimensional elements (e.g., TPMS elements) equals a surface area that is determined in accordance with the systems and methods of the present disclosure.

Utilizing the systems and methods of the present disclosure yields a design for a structure that is more likely to meet the thermal management requirements as well as the size and/or shape requirements. This is because, in one example, an optimization process driven by thermal requirement function is utilized to optimize the required surface area for the particular application based on a selected TPMS element. A TPMS is a triply periodic minimal surface. Triply periodic means that the structure has a unit which repeats itself along each of the three axes in a three dimensional coordinate system. Minimal surface means a surface that has zero mean curvature where the mean curvature is the average of the principal curvatures of the surface.

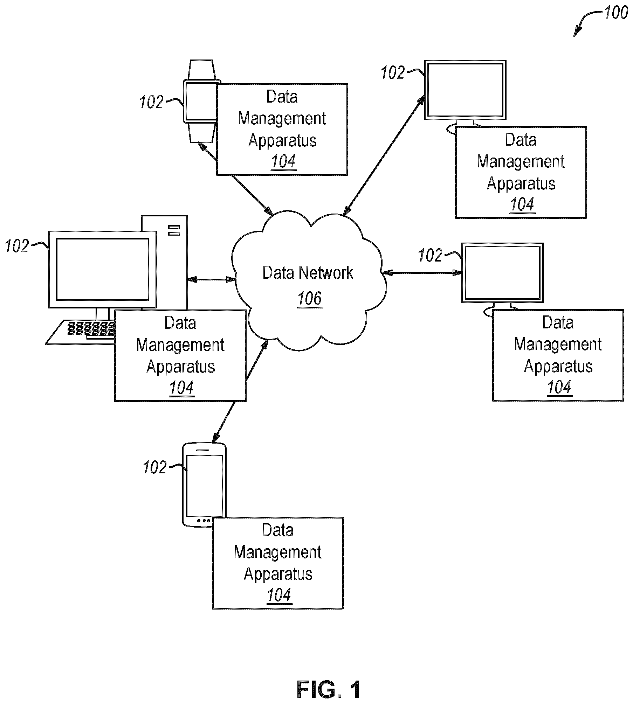

Referring to Figure 1, in various examples, a system 100 includes one or more information handling devices 102, one or more data management apparatuses 104, one or more data networks 106, one or more servers 108, and one or more aircraft (not shown). In certain examples, even though a specific number of information handling devices 102, data management apparatuses 104, data networks 106, and servers 108 are depicted in Figure 1, one of skill in the art will recognize, in light of this disclosure, that any number of information handling devices 102, data management apparatuses 104, data networks 106, servers, and aircraft may be included in the system 100.

In one example, the system 100 includes one or more information handling devices 102. The information handling devices 102 may be embodied as one or more of a desktop computer, a laptop computer, a tablet computer, a smart phone, a smart speaker (e.g., Amazon Echo®, Google HomeO, Apple HomePod®), an Internet of Things device, a security system, a set-top box, a gaming console, a smart TV, a smart watch, a fitness band or other wearable activity tracking device, an optical head-mounted display (e.g., a virtual reality headset, smart glasses, head phones, or the like), a High-Definition Multimedia Interface ("HDMI") or other electronic display dongle, a personal digital assistant, a digital camera, a video camera, or another computing device comprising a processor (e.g., a central processing unit ("CPU"), a processor core, a field programmable gate array ("FPGA") or other programmable logic, an application specific integrated circuit ("ASIC"), a controller, a microcontroller, and/or another semiconductor integrated circuit device), a volatile memory, and/or a non-volatile storage medium, a display, a connection to a display, and/or the like.

In certain examples, the information handling devices 102 are part of a three-dimensional design system, an artificial intelligence system, a simulation system, and/or the like.

In one example, the data management apparatus 104 includes a semiconductor integrated circuit device (e.g., one or more chips, die, or other discrete logic hardware), or the like, such as a field-programmable gate array ("FPGA") or other programmable logic, firmware for an FPGA or other programmable logic, microcode for execution on a microcontroller, an application-specific integrated circuit ("ASIC"), a processor, a processor core, or the like. In one example, the data management apparatus 104 is mounted on a printed circuit board with one or more electrical lines or connections (e.g., to volatile memory, a non-volatile storage medium, a network interface, a peripheral device, a graphical/display interface, or the like). The hardware appliance includes one or more pins, pads, or other electrical connections configured to send and receive data (e.g., in communication with one or more electrical lines of a printed circuit board or the like), and one or more hardware circuits and/or other electrical circuits configured to perform various functions of the data management apparatus 104.

The semiconductor integrated circuit device or other hardware appliance of the data management apparatus 104, in certain examples, includes and/or is communicatively coupled to one or more volatile memory media, which may include but is not limited to random access memory ("RAM"), dynamic RAM ("DRAM"), cache, or the like. In one example, the semiconductor integrated circuit device or other hardware appliance of the data management apparatus 104 includes and/or is communicatively coupled to one or more non-volatile memory media, which may include but is not limited to: NAND flash memory, NOR flash memory, nano random access memory (nano RAM or "NRAM"), nanocrystal wire-based memory, silicon-oxide based sub-10 nanometer process memory, graphene memory, Silicon-Oxide-Nitride-Oxide-Silicon ("SONOS"), resistive RAM ("RRAM"), programmable metallization cell ("PMC"), conductive-bridging RAM ("CBRAM"), magneto-resistive RAM ("MRAM"), dynamic RAM ("DRAM"), phase change RAM ("PRAM" or "PCM"), magnetic storage media (e.g., hard disk, tape), optical storage media, or the like.

The data network 106, in one example, includes a digital communication network that transmits digital communications. The data network 106 may include a wireless network, such as a wireless cellular network, a local wireless network, such as a Wi-Fi network, a Bluetooth® network, a near-field communication ("NFC") network, an ad hoc network, and/or the like. The data network 106 may include a wide area network ("WAN"), a storage area network ("SAN"), a local area network ("LAN") (e.g., a home network), an optical fiber network, the internet, or other digital communication network. The data network 106 may include two or more networks. The data network 106 may include one or more servers, routers, switches, and/or other networking equipment. The data network 106 may also include one or more computer readable storage media, such as a hard disk drive, an optical drive, non-volatile memory, RAM, or the like.

The wireless connection may be a mobile telephone network. The wireless connection may also employ a Wi-Fi network based on any one of the Institute of Electrical and Electronics Engineers ("IEEE") 802.11 standards. Alternatively, the wireless connection may be a Bluetooth® connection. In addition, the wireless connection may employ a Radio Frequency Identification ("RFID") communication including RFID standards established by the International Organization for Standardization ("ISO"), the International Electrotechnical Commission ("IEC"), the American Society for Testing and Materials® (ASTM®), the DASH7™ Alliance, and EPCGlobal™.

The wireless connection may be an infrared connection including connections conforming at least to the Infrared Physical Layer Specification ("IrPHY") as defined by the Infrared Data Association® ("IrDA"®). Alternatively, the wireless connection may be a cellular telephone network communication. All standards and/or connection types include the latest version and revision of the standard and/or connection type as of the filing date of this application.

The one or more servers 108, in one example, may be embodied as blade servers, mainframe servers, tower servers, rack servers, and/or the like. The one or more servers 108 may be configured as mail servers, web servers, application servers, FTP servers, media servers, data servers, web servers, file servers, virtual servers, and/or the like. The one or more servers 108 may be communicatively coupled (e.g., networked) over a data network 106 to one or more information handling devices 102 and may be configured to store content and to execute or run video/audio conferencing and/or other online presentation algorithms, programs, applications, processes, and/or the like. The one or more servers 108 may be part of a flight management system maintained by an aviation agency, e.g., the federal aviation administration, an airline, an airport, and/or the like.

Although the thermal management components of the present disclosure are designed for use in aerospace applications, such as the aircraft of the system 100, in other applications, the thermal management components can be designed for use in other structures and/or vehicles. It is noted that the aircraft, in one example, may include civil and military aircraft, such as a private airplane, a commercial airplane, a cargo airplane, a jet, a helicopter, a drone, and/or the like. One of skill in the art, in light of this disclosure, will recognize the various types of aircraft that may be used with the solutions proposed herein.

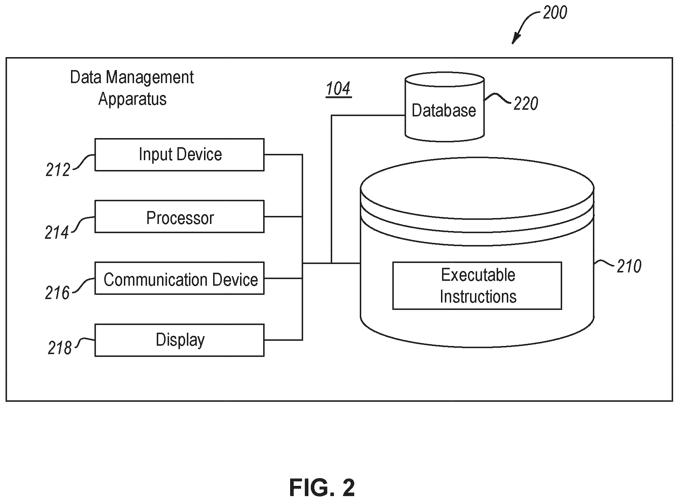

Referring to Figure 2, in various examples, a system 200 includes a data management apparatus 104. The data management apparatus 104 includes an input device 212, a processor 214, a communication device 216, a display 218, a database 220, and a memory device 210, which is configured to store executable instructions. In various examples, the executable instructions cause the data management apparatus 104 to generate a three-dimensional structure for a thermal management component.

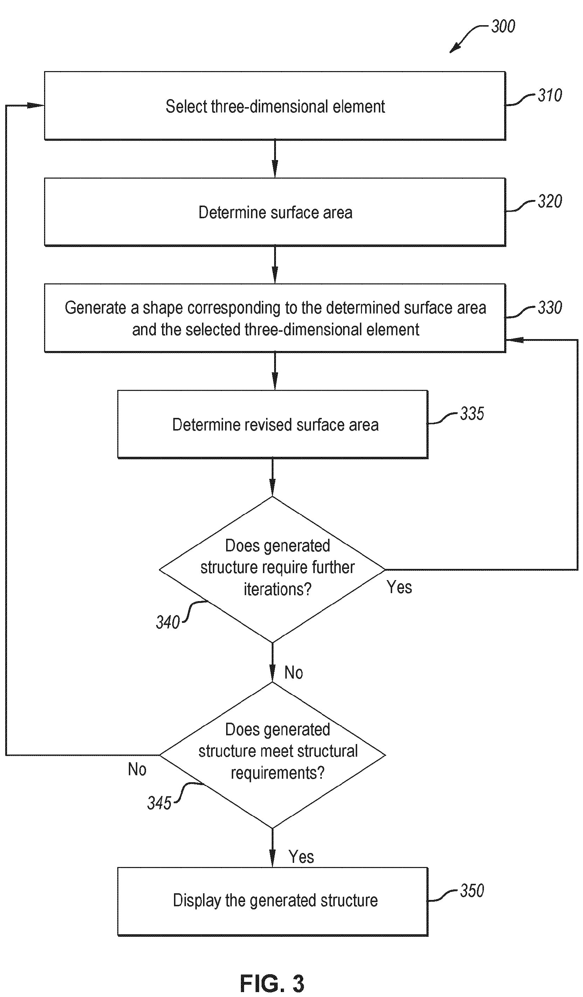

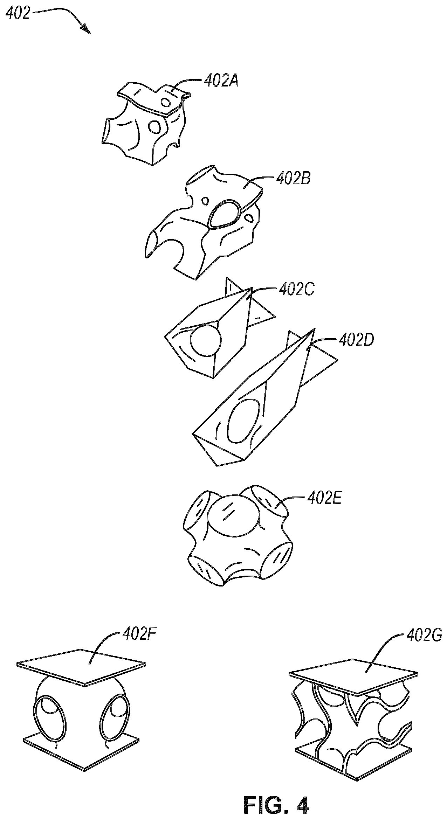

Referring to Figure 3, and according to some examples, disclosed herein is a method 300 of generating a three-dimensional structure for a thermal management component. At block 310, a three-dimensional element is selected. Figure 4 shows examples of seven different three-dimensional elements 402A-G. In one example, the three-dimensional element has triple periodic minimal surfaces (TPMS). According to certain examples, the three-dimensional element is obtained by input device 212 from a plurality of three-dimensional elements displayed on display 218. In one particular example, database 220 stores a plurality of three-dimensional elements. The database also stores various characteristics of each of the three-dimensional elements, such as surface area, and one or more j/f ratios (or the j and f factors individually) and their corresponding Reynolds numbers. In one or more examples, a user selects a particular three-dimensional element to use based on one or more characteristics, such as the j and f factors. In one example, the j and f factors are determined by experimental measurements on one or more of the three-dimensional elements stored in the database. In one example, the j and f factors are determined by CFD simulations on one or more of the three-dimensional elements stored in the database. In certain examples, processor 214 selects a three-dimensional element from database 220 based on certain parameters provided via input device 212.

In one example, in addition to selecting the three-dimensional element, an aspect ratio for the three-dimensional element is also selected. For example, three-dimensional element 402A and 402B have the same shape, except that three-dimensional element 402B is 2x the size of three-dimensional element 402A. In another example, the aspect ratio is specified for one or more axis where the size of the three-dimensional element is modified along one or more axis. In one example, the method 300 is repeated with a different three-dimensional element to determine which one of multiple three-dimensional elements has the best performance. In one or more examples, two or more different three-dimensional elements are selected and used to generate the shape.

At block 320 of the method 300, processor 214 determines a surface area (A). In one example, a desired first temperature difference ($\Delta$T1) is obtained via the input device 212. The desired first temperature difference ($\Delta$T1) is the desired difference in temperature of a first fluid and a second fluid at an inlet of a thermal management component design. In one example, a desired second temperature difference ($\Delta$T2) is also obtained via the input device 212. The desired second temperature difference ($\Delta$T2) is the desired difference in temperature of the first fluid and the second fluid at an outlet of the thermal management component design. In one example, a desired heat transfer coefficient (U) of the thermal management component design is obtained or selected via the input device 212. In one example, the surface area A is determined with the aid of the following equation:

$$Q = U \times A \times LMTD \text{ (equation 1)}$$

In the above equation, Q is a heat flow rate (in Watts), U is the overall heat transfer co-efficient (e.g., in W/m$^2$K), A is the surface area (e.g., in m$^2$) and LMTD is the log mean temperature differential of the first and second fluids. As used herein, the first fluid dissipates heat and the second fluid absorbs heat from the first fluid. The LMTD function varies based on whether the two fluids flow concurrently, or if they flow in opposite directions. Generally, the four temperature values obtained via the input device 212 are the inlet temperature of the first fluid, the inlet temperature of the second fluid, the outlet temperature of the first fluid, and the outlet temperature of the second fluid. Additionally, in one example, an input value is obtained, via the input device 212, to indicate whether the first fluid and the second fluid flow concurrently or in opposite directions. Based on these inputs, values for $\Delta$T1 and $\Delta$T2 are calculated, and used to calculate the LMTD value, using the following equation:

$$LMTD = (\Delta T1 - \Delta T2) / \ln (\Delta T1 / \Delta T2) \text{ (equation 2).}$$

In one example, for parallel flow of both fluids, $\Delta$T1 and $\Delta$T2 are the temperature differences at the inlet and outlet the thermal management design, respectively. In another example, where the fluids flow in opposite directions, $\Delta$T1 is the temperature difference between the first and second fluid at the inlet for the first fluid (and the outlet for the second fluid) and $\Delta$T2 is the temperature difference between the first and second fluid at the outlet for the first fluid (and the inlet for the second fluid).

In one example, the value of U is assumed, and a surface area A is calculated using equation 1. In one example, the value of Q is a known value for the heat transfer application. In one example, the value of Q is obtained for the heat transfer application via input device 212. A structure corresponding to the determined surface area A is generated at block 330 of the method 300 by processor 214.

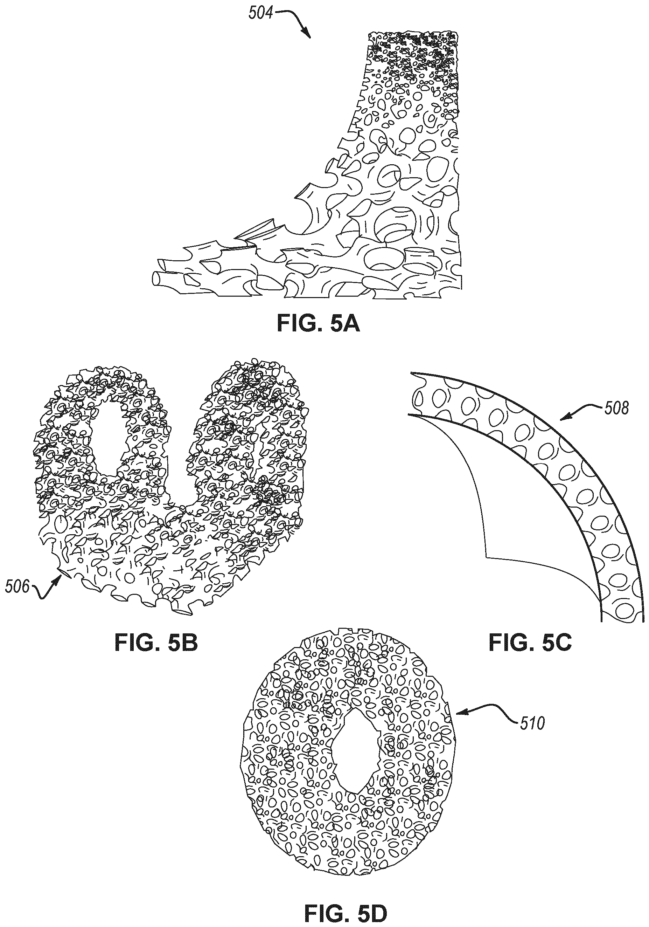

In one example, a quantity of the selected three-dimensional elements are intercoupled across a three-dimensional structure. Examples of three-dimensional structures are shown in Figures 5A-5D (e.g., three-dimensional structure 504 of Figure 5A, three-dimensional structure 506 of Figure 5B, three-dimensional structure 508 of Figure 5C, and three-dimensional structure 510 of Figure 5D). In one example, the three-dimensional structure is provided via input device 212. The three-dimensional structure can be modeled in a 3D design file that is provided or loaded to the memory 210. In one example, the three-dimensional structure is selected from a number of three-dimensional structures stored in the memory 210. In one or more examples, the shape of the three-dimensional structure is determined by distributing the selected three-dimensional element to achieve the desired surface area. In some of these examples, the distribution is pre-determined. In some of these examples, the distribution is provided via input device 212. In some of these examples, the distribution is constrained based on design requirements for the three-dimensional structure provided via input device 212.

In one example, block 330 of the method 300 also includes selecting a quantity of the selected three-dimensional element. In one example, a fixed number of three-dimensional elements are distributed across a surface area per unit length of the three-dimensional structure by processor 214. In one example, a fixed number of a single three-dimensional element are distributed across the three-dimensional structure. In another example, two or more different three-dimensional elements are intercoupled across the three-dimensional structure.

At block 335 of method 300, processor 214 determines a revised surface area for the generated three-dimensional structure. In one or more examples, determining a revised surface area for the generated three-dimensional structure includes determining a heat transfer rate for the generated structure. In one example, the heat transfer rate is determined by processor 214 based on the j and f factors of the three-dimensional element used to generate the three-dimensional structure. In another example, processor 214 estimates the heat transfer rate based on the j and f factors. In one or more examples, determining a revised surface area for the generated three-dimensional structure also includes determining an updated value for LMTD based on the calculated or estimated heat transfer rate. In one or more examples, processor 214 further determines a revised surface area based on the updated value for LMTD using and heat transfer rate using equation 1.

In one example, a revised value of U is calculated by determining a simulated temperature difference (dT) in the generated three-dimensional structure, using the following equation:

$$Q = U \times A \times dT \text{ (equation 3)}$$

In the above equation, Q is the heat flow rate (in Watts), U is the overall heat transfer co-efficient (in $W/m^2K$), A is the surface area (in $m^2$) and dT is the actual temperature differential in the heat exchanger.

The calculated value of U is then used to re-calculate the value of A based on equation 1. At block 340, processor 214 determines whether the generated structure requires further iterations. In one or more examples, processor 214 compares the revised surface area with the surface area determined at block 320 of method 300. In one example, if the difference exceeds a predetermined threshold, then processor 214 may determine that further iterations are required. In another example, the processor may determine whether the difference exceeds a certain percentage or tolerance. In another example, processor 214 may compare a number of iterations performed to a predetermined or user defined number. In yet another example, processor 214 determines whether the generated structure requires further iterations based on difference in the (i) the LMTD values; (ii) heat transfer rate; (iii) the surface area; or (iv) a combination or one or more of these factors.

When processor 214 determines that further iterations are required, control for method 300 returns to block 330 where a structure corresponding to the revised surface area is generated, as described herein.

When processor 214 determines that further iterations are not required, processor 214 determines whether the generated three-dimensional structure meets structural requirements, at block 345 of method 300. In certain examples, processor 214 uses modular structural data to check if the generated three-dimensional structure meets requirements. In some of these examples, processor 214 may further determine if the generated three-dimensional structure meets thermal requirements.

After the three-dimensional structure has been generated, and the generated three-dimensional structure meets the structural requirements, the generated three-dimensional structure is displayed via the display 218 at block 350 of the method 300. However, if the generated three-dimensional structure does not meet the structural requirements at block 345, the method 300 returns to block 310 and selects a different three-dimensional element. In one example, the executable instructions cause a three-dimensional model file to be generated that can be exported via the communication device 216. The three-dimensional model file is used as an input to an additive manufacturing or other manufacturing process.

Figure 4 shows examples of seven different three-dimensional elements 402A-G. Three-dimensional elements 402A-E are examples of TPMS structures. The-dimensional elements 402F and 402G are examples of a single TPMS unit with skins attached on either side. In one or more examples, database 220 stores these structures in an appropriate format. In addition, database 220 also stores data corresponding to these structures, such as j and f factors, aspect ratios, heat transfer rates, etc.

Figure 5A is an exposed view that shows three-dimensional elements of a three-dimensional structure 504. Fig. 5B shows an exposed view of a three-dimensional structure 506 made of three-dimensional elements according to one or more examples of the present disclosure. Fig. 5C shows a surface and exposed view of a partial three-dimensional structure 508 according to one more examples of the present disclosure. More specifically, three-dimensional structure 508 is a TPMS structure made of TPMS elements with skins that have been mapped onto a curved surface to form a sandwich panel. Fig. 5D shows an exposed view of a three-dimensional structure 510 according to one more examples of the present disclosure. Three-dimensional structures 502, 504, 506, 508, and 510 are generated using the process disclosed herein by data management apparatus 104.

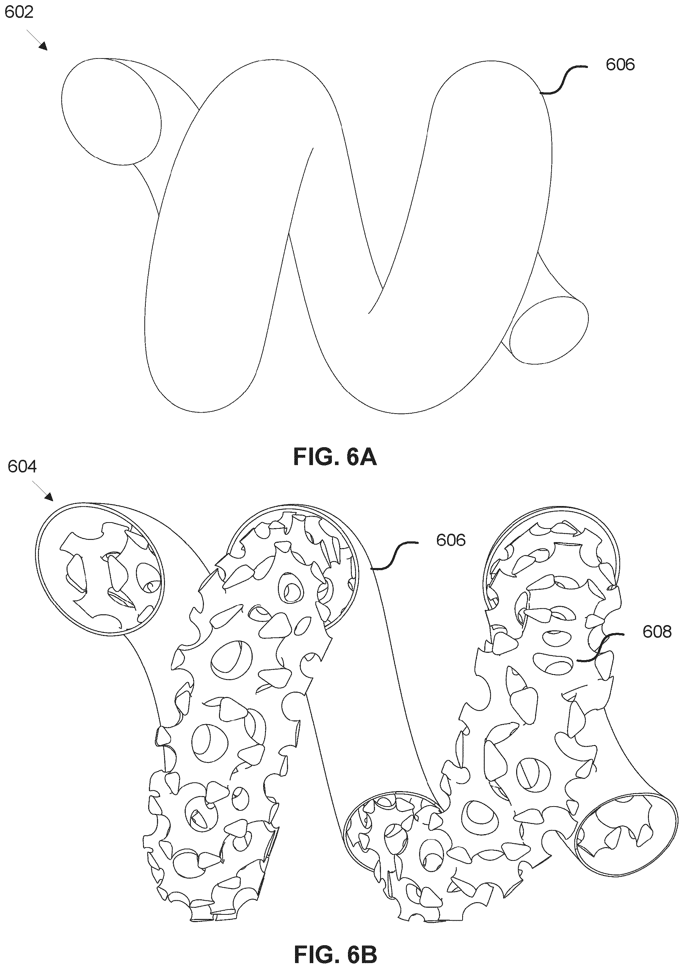

Figure 6A is a view of a thermal management component 602 used in thermal management applications, according to one or more examples of the present disclosure. Thermal management component 602 has an outer surface 606 that encapsulates a three-dimensional structure. The outer surface 606 enables the fluid flowing through thermal management component 602 to be encapsulated. Figure 6B is a view showing a three-dimensional structure 608 incorporated into a thermal management component 604, according to one or more examples of the present disclosure.

In one or more examples, in addition to or instead of satisfying thermal constraints, the systems and methods disclosure herein can be used to generate a three-dimensional structure that meets certain acoustic constraints.

In certain examples, the three-dimensional structure is incorporated into a thermal management component that is used in multi-fluid heat exchangers. In certain examples, the three-dimensional structure is incorporated into a thermal management component that is used in phase change heat exchangers.

In one or more examples, the three-dimensional structure incorporates two or more different three-dimensional shapes.

In certain examples, inputs such as thermal constraints and requirements are used by data management apparatus. In certain examples, inputs such as acoustic constraints and requirements are used by data management apparatus. In certain examples, inputs such as structural constraints and requirements are used by data management apparatus. Although in some examples, the inputs include thermal, acoustic, and/or structural constraints, in other examples, the inputs can include additional or alternative constraints, such as, without limitation, economic constraints, weight constraints, aerodynamic constraints, manufacturability constraints, and/or the like.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two." Moreover, unless otherwise noted, as defined herein a plurality of particular features does not necessarily mean every particular feature of an entire set or class of the particular features.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagram included herein is generally set forth as logical flow chart diagram. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown. Blocks represented by dashed lines indicate alternative operations and/or portions thereof. Dashed lines, if any, connecting the various blocks represent alternative dependencies of the operations or portions thereof. It will be understood that not all dependencies among the various disclosed operations are necessarily represented.

Many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, comprise one or more physical or logical blocks of executable code which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for examples may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The described features, structures, or characteristics of the examples may be combined in any suitable manner. In the above description, numerous specific details are provided, such as examples of programming, software modules, user selections, network transactions, database queries, database structures, hardware modules, hardware circuits, hardware chips, etc., to provide a thorough understanding of examples. One skilled in the relevant art will recognize, however, that examples may be practiced without one or more of the specific details, or with other methods, components, materials, and so forth. In other instances, well-known structures, materials, or operations are not shown or described in detail to avoid obscuring aspects of an example.

Aspects of the examples are described above with reference to schematic flowchart diagrams and/or schematic block diagrams of methods, apparatuses, systems, and program products according to examples. It will be understood that each block of the schematic flowchart diagrams and/or schematic block diagrams, and combinations of blocks in the schematic flowchart diagrams and/or schematic block diagrams, can be implemented by code. These code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the figures illustrate the architecture, functionality, and operation of possible implementations of apparatuses, systems, methods and program products according to various examples. In this regard, each block in the schematic flowchart diagrams and/or schematic block diagrams may represent a module, segment, or portion of code, which comprises one or more executable instructions of the code for implementing the specified logical function(s).

The present subject matter may be embodied in other specific forms without departing from its spirit or essential characteristics. The described examples are to be considered in all respects only as illustrative and not restrictive. All changes which come within the meaning and range of equivalency of the claims are to be embraced within their scope.

**Claims**

1. A computer-implemented method (300) of generating a three-dimensional structure (504) for a thermal management component (602), the method (300) comprising:

    selecting (310), by a processor (214), at least one three-dimensional element (402A) from a plurality of three-dimensional elements (402);
    determining (320), by the processor (214), a surface area (A) necessary to dissipate heat from a first fluid according to a desired temperature difference and a desired heat transfer coefficient (U); and
    generating (330), by the processor (214), the three-dimensional structure (504) for the thermal management component (602) by intercoupling a quantity of the selected three-dimensional elements (402A) whose combined surface area equals the determined surface area (A).

2. The computer-implemented method (300) according to claim 1, wherein selecting (310), by the processor (214), the three-dimensional element (402) further comprises determining, by the processor (214), a performance factor based on at least a size and an aspect ratio of the three-dimensional element (402A); and wherein the three-dimensional element (402A) is selected based at least on the performance factor meeting a predetermined threshold.

3. The computer-implemented method (300) according to claim 1 or 2, wherein determining (320), by the processor (214), the surface area (A) necessary to dissipate heat (q) from the first fluid according to the desired temperature difference and the desired heat transfer coefficient (U) further comprises:

    determining, by the processor (214), a first quantity of heat dissipated by the generated the three-dimensional structure (504); and
    determining, by the processor (214), a second surface area (A2), wherein the second surface area dissipates a quantity of heat that is closer to the heat (q) than a quantity of heat dissipated by the surface area (A1).

4. The computer-implemented method (300) according to claim 3, wherein:
   the quantity of heat dissipated by the generated the three-dimensional structure (504) is determined by: using thermal data associated with the selected at least one three-dimensional element (402A), and simulating a rate of heat transfer by the generated the three-dimensional structure (504).

5. The computer implemented method (300) according to any of the preceding claims, wherein the surface area (A) is determined based on a log mean temperature difference formula that uses the surface area (A), a first temperature difference ($\Delta T1$), the heat transfer coefficient (U), and a second temperature difference ($\Delta T2$) of a second fluid, the second fluid used to regulate the temperature of the first fluid.

6. The computer implemented method (300) according to any of the preceding claims, further comprising receiving, via an input device (212) a desired shape of the thermal management component (602), wherein the three-dimensional structure (504) is generated so that the three-dimensional structure has the desired shape.

7.  The computer implemented method (300) according to any of the preceding claims, wherein the first fluid is a fluid to be cooled within a heat exchanger and the component (602) forms part of the heat exchanger.

8.  The computer implemented method (300) according to any of the preceding claims, wherein the three-dimensional element (402A) comprises one or more triply periodic minimal surfaces.

9.  A system comprising (104):

   a processor (214);
   an input device (212);
   a display device (218); and
   a memory device (210) storing instructions, which when executed by the processor (214), cause the processor (214) to, at least:

      select (310) a three-dimensional element (402A) from a plurality of three-dimensional elements (402);
      determine (320), a surface area (A) necessary to dissipate heat from a first fluid according to a desired first temperature difference ($\Delta T1$) and a desired heat transfer coefficient (U);
      generate (330), a three-dimensional structure (504) for a thermal management component (602) by intercoupling a quantity of the selected three-dimensional element (402A) whose combined surface area equals the determined surface area (A); and
      display (350), via the display device (218), the generated three-dimensional structure (504) for the thermal management component (602).

10. The system (104) according to claim 9, wherein the instructions further cause the processor (214) to:
   determine a performance factor based on at least a size and an aspect ratio of the three-dimensional element (402A); and wherein the three-dimensional element (402A) is selected based at least on the performance factor meeting a predetermined threshold.

11. The system (104) according to claim 9 or 10, wherein the instructions further cause the processor (214) to:

   receive an input, via an input device (212), of the desired heat transfer coefficient (U);
   determine a first surface area (A1);
   determine a first estimated heat transfer coefficient (U1); and
   determine a second surface area (A2) corresponding to the first estimated heat transfer coefficient (U1), wherein the second surface area dissipates a quantity of heat that is closer to the heat (q) than a quantity of heat dissipated by the first surface area (A1).

12. The system (104) according to any one of claims 9-11, wherein the instructions further cause the processor (214) to:

   determine the first estimated heat transfer coefficient (U1) by simulating a rate of heat transfer over the surface area (A1) and equating the first estimated heat transfer coefficient (U1) to the heat transfer coefficient associated with the simulated rate of heat transfer; and/or
   determine the surface area (A) based on a log mean temperature difference formula that uses the surface area (A), the first temperature difference ($\Delta T1$), the heat transfer coefficient (U), and a second temperature difference ($\Delta T2$) of a second fluid, the second fluid used to regulate the temperature of the first fluid; and/or
   receive, via an input device (212) a desired shape of the thermal management component (602), wherein the three-dimensional structure (504) is generated so that the three-dimensional structure has the desired shape.

13. The system (104) according to any one of claims 9-12, wherein:

   the first fluid is a fluid to be cooled within a heat exchanger and the thermal management component (602) forms part of the heat exchanger; and/or
   the three-dimensional element (402A) comprises one or more triply periodic minimal surfaces.

14. A non-transitory computer-readable medium (210) storing instructions, which when executed by a processor (214), cause the processor to:

select (310) a three-dimensional element (402A) from a plurality of three-dimensional elements (402);

determine (320), a surface area (A) necessary to dissipate heat from a first fluid according to a desired first temperature difference ($\Delta$T1) and a desired heat transfer coefficient (U);

generate (330), a three-dimensional structure (504) for a thermal management component (602) by intercoupling a quantity of the selected three-dimensional element (402A) whose combined surface area equals the determined surface area (A); and

display (350), via a display device (218), the generated three-dimensional structure (504) for the thermal management component (602).

15. The non-transitory computer-readable medium (210) according to claim 14, wherein the instructions further cause the processor (214) to:

receive an input, via an input device (212), of the desired heat transfer coefficient (U),

determine a quantity of heat dissipated by the generated the three-dimensional structure, (504) and

determine a second surface area (A2), wherein the second surface area dissipates a quantity of heat that is closer to the heat (q) than a quantity of heat dissipated by the surface area (A1) and wherein the quantity of heat dissipated by the three-dimensional structure (504) is determined by: using thermal data associated with the one three-dimensional element (402A), and simulating a rate of heat transfer by the generated the three-dimensional structure (504); and/or

determine the surface area (A) based on a log mean temperature difference formula that uses the surface area (A), the first temperature difference ($\Delta$T1), the heat transfer coefficient (U), and a second temperature difference ($\Delta$T2) of a second fluid, the second fluid used to regulate the temperature of the first fluid; and/or

receive, via an input device (212) a desired shape of the thermal management component (602), wherein the three-dimensional structure (504) is generated so that the three-dimensional structure has the desired shape.

**FIG. 1**

**FIG. 2**

300

Select three-dimensional element — 310

Determine surface area — 320

Generate a shape corresponding to the determined surface area and the selected three-dimensional element — 330

Determine revised surface area — 335

Does generated structure require further iterations?

340

Yes

No

Does generated structure meet structural requirements?

345

No

Yes

Display the generated structure — 350

**FIG. 3**

402

402A

402B

402C

402D

402E

402F

402G

**FIG. 4**

504

FIG. 5A

506

FIG. 5B

508

FIG. 5C

510

FIG. 5D

602

606

**FIG. 6A**

604

606

608

**FIG. 6B**

Europäisches
Patentamt

European
Patent Office

Office européen
des brevets

# EUROPEAN SEARCH REPORT

Application Number

EP 24 20 0570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IYER JAISREE ET AL: "Heat transfer and pressure drop characteristics of heat exchangers based on triply periodic minimal and periodic nodal surfaces", APPLIED THERMAL ENGINEERING, PERGAMON, OXFORD, GB, vol. 209, 19 February 2022 (2022-02-19), XP087016362, ISSN: 1359-4311, DOI: 10.1016/J.APPLTHERMALENG.2022.118192 [retrieved on 2022-02-19] * Sec. 1, 2.2, 2.4, 3.1, 3.3, 4; eq. (1,3,4,8,9); figure 1; tables 1,2 * | 1-15 | INV. G06F30/20  ADD. G06F30/28 G06F111/10 G06F119/08 |
| X | REYNOLDS BENJAMIN W ET AL: "Characterisation of Heat Transfer within 3D Printed TPMS Heat Exchangers", INTERNATIONAL JOURNAL OF HEAT AND MASS TRANSFER, ELSEVIER, AMSTERDAM, NL, vol. 212, 14 May 2023 (2023-05-14), XP087324265, ISSN: 0017-9310, DOI: 10.1016/J.IJHEATMASSTRANSFER.2023.124264 [retrieved on 2023-05-14] * Sec. 2.1, 2.2, 3.2; figures 1,5 * | 1-15 | |
| A | JIHO KIM ET AL: "3D printed compact heat exchangers with mathematically defined core structures", JOURNAL OF COMPUTATIONAL DESIGN AND ENGINEERING, vol. 2020, no. 7, 7 April 2020 (2020-04-07), pages 1-24, XP055717335, ISSN: 2288-5048, DOI: 10.1093/jcde/qwaa032 * figures 17 - 20 * | 6,12,15 | TECHNICAL FIELDS SEARCHED (IPC)  G06F F28F |

The present search report has been drawn up for all claims

| Place of search | Date of completion of the search | Examiner |
|---|---|---|
| Munich | 15 January 2025 | Lampmann, Arne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                           
& : member of the same patent family, corresponding document

EPO FORM 1503 03.82 (P04C01)